# FASCICULE DE BREVET EUROPEEN

(11) **EP 3 925 912 B1**
(45) Date de publication et mention de la délivrance du brevet: **05.06.2024**
(21) Numéro de dépôt: 21179347.6
(22) Date de dépôt: 14.06.2021
(51) Int. Cl.: B65G 69/00, B60R 25/08, G05B 19/048

(54) **DISPOSITIF D'IMMOBILISATION D'UN VÉHICULE ROUTIER DE TRANSPORT DE MARCHANDISES ET PROCÉDÉ ASSOCIÉ**
VORRICHTUNG ZUM BLOCKIEREN EINES STRASSENFAHRZEUGS FÜR DEN WARENTRANSPORT UND ENTSPRECHENDES VERFAHREN
DEVICE FOR IMMOBILISING A ROAD VEHICLE FOR TRANSPORTING GOODS AND ASSOCIATED METHOD

(30) Priorité: 15.06.2020 FR 2006205
(43) Date de publication de la demande: 22.12.2021
(73) Titulaire: Jean Chereau SAS, 50220 Ducey (FR)
(72) Inventeur: THIERRY, Franklin, 50870 LE LUOT (FR)
(74) Mandataire: Casalonga

(56) Documents cités:
- WO-A1-2017/108201
- GB-A- 2 279 416
- US-A1- 2014 021 778
- US-A1- 2015 025 766
- US-A1- 2018 304 748

## Description

La présente invention concerne le domaine des véhicules routiers de transport de marchandises, tels que des camions, des semi-remorques, des remorques ou des porteurs, et plus particulièrement un dispositif d'immobilisation d'un véhicule routier de transport de marchandises et un procédé mettant en oeuvre un tel dispositif.

Classiquement, un véhicule routier de transport de marchandises est accosté à un quai de chargement d'un entrepôt pour charger ou décharger des marchandises contenues dans le véhicule routier. Le document WO2017/108201 A1 divulgue un procédé d'immobilisation d'un véhicule routier de transport de marchandises lors de l'accostage dudit véhicule à un quai de chargement, comprenant l'émission d'un signal d'activation électromagnétique par des moyens d'émission disposés sur le quai de chargement. Le procédé comprenant également l'actionnement de moyens d'immobilisation en position du véhicule routier de transport de marchandises, les moyens d'immobilisation étant activés par des moyens de contrôle lors de la réception du signal d'activation électromagnétique par lesdits moyens de contrôle, les moyens d'immobilisation et les moyens de contrôle étant disposés sur le véhicule routier de transport de marchandises. Ledit document divulgue de plus un dispositif d'immobilisation d'un véhicule routier de transport de marchandises et un véhicule correspondant.

Lors de ces opérations, un chargeur transborde les marchandises entre le véhicule routier et l'entrepôt.

Afin d'empêcher la chute du chargeur entre un espace subsistant entre le quai et le véhicule pendant les opérations de chargement et déchargement, il est nécessaire d'empêcher un éventuel déplacement du véhicule routier.

Dans ce but, le véhicule peut comprendre un interrupteur manuel intégré à l'un des flancs de la carrosserie du véhicule et raccordé au système de freinage électronique de celui-ci de sorte que lorsque l'interrupteur est actionné, le système de freinage actionne les freins de service du véhicule pour l'immobiliser en position.

Toutefois, il est nécessaire d'alimenter électriquement le système de freinage électronique du véhicule pour pouvoir actionner les freins de service.

Or, lorsque le véhicule est une remorque ou une semi-remorque, celle-ci est manoeuvrée à l'aide d'un tracteur de parc et le système de freinage électronique n'est alors pas alimenté à ce tracteur.

Par conséquent, il n'est pas possible d'immobiliser en position la remorque ou la semi-remorque.

Par ailleurs, il est nécessaire qu'un opérateur actionne manuellement l'interrupteur permettant l'actionnement des freins de parc, qui sont aussi appelés freins de stationnement.

La présente invention vise à remédier à ces inconvénients.

L'invention a pour objet un procédé d'immobilisation d'un véhicule routier de transport de marchandises lors de l'accostage dudit véhicule à un quai de chargement selon la revendication 1.

Le véhicule routier de transport de marchandises peut comprendre une remorque, une semi-remorque ou un porteur.

Le rideau de fermeture est mobile entre la position de chargement/déchargement et la position fermée.

Par « position de chargement/déchargement », on entend la position du rideau de fermeture lorsqu'il n'est pas dans sa position de fermeture.

Le véhicule routier de transport de marchandises est immobilisé automatiquement en position lorsque le rideau de fermeture du quai de chargement est dans la position fermée.

Aucune intervention manuelle d'un opérateur est nécessaire.

De plus, le véhicule de transport routier ne nécessite pas impérativement de source d'alimentation extérieure pour actionner les moyens d'immobilisation.

Selon un mode de réalisation, l'actionnement des moyens d'immobilisation du véhicule routier de transport de marchandises comprend l'activation d'un dispositif de freinage de parc dudit véhicule.

Selon une caractéristique, l'activation du dispositif de freinage de parc du véhicule routier de transport de marchandises comprend la dépressurisation d'un vase à ressort dudit dispositif pour actionner les freins du véhicule.

Selon un autre mode de réalisation, l'actionnement des moyens d'immobilisation du véhicule routier de transport de marchandises comprend l'émission d'un signal d'anti-démarrage, le signal d'anti-démarrage étant configuré pour éteindre un moteur de propulsion du véhicule routier de transport de marchandises ou empêcher le démarrage dudit moteur.

Selon une caractéristique, le signal d'anti-démarrage comprend une tension continue prédéterminée qui est générée par les moyens de contrôle et qui est transmise à une unité de contrôle du moteur de propulsion du véhicule routier de transport de marchandises.

La tension continue prédéterminée peut par exemple être égale à 12 volts, 24 volts ou 48 volts.

Selon l'invention, le signal d'activation électromagnétique comprend une onde radio.

Selon l'invention, les moyens d'émission comprennent un émetteur d'identification radio fréquence, et les moyens de contrôle comprennent un badge d'identification radio fréquence et un lecteur d'identification radio fréquence synchronisé avec ledit badge, l'émission du signal d'activation électromagnétique comprenant l'émission du signal d'activation électromagnétique par l'émetteur d'identification radio fréquence lorsque le rideau de fermeture est dans la position de chargement/déchargement, et la réception du signal d'activation électromagnétique comprenant l'émission d'un signal codé par le badge d'identification radio fréquence alimenté par le signal d'activation électromagnétique et la réception du signal codé par le lecteur d'identification radio fréquence.

L'invention concerne également un dispositif d'immobilisation d'un véhicule routier de transport de marchandises lors de l'accostage dudit véhicule à un quai de chargement selon la revendication 6.

Selon un mode de réalisation, les moyens d'immobilisation comprennent un dispositif de freinage de parc du véhicule.

Selon une caractéristique, le dispositif de freinage de parc du véhicule comprend un vase à ressort configuré pour actionner des freins du véhicule, les moyens de contrôle étant configurés pour dépressuriser le vase à ressort.

Selon un autre mode de réalisation, les moyens d'immobilisation comprennent une unité de contrôle du véhicule routier de transport de marchandises configuré pour éteindre un moteur de propulsion du véhicule routier de transport de marchandises ou empêcher le démarrage dudit moteur à la réception d'un signal d'anti-démarrage.

Selon l'invention, les moyens d'émission comprennent un émetteur d'identification radio fréquence, et les moyens de contrôle comprennent un badge d'identification radio fréquence et un lecteur d'identification radio fréquence synchronisé avec le badge, l'émetteur d'identification radio étant configuré pour émettre le signal d'activation électromagnétique lorsque le rideau de fermeture est dans la position de chargement/déchargement, le badge d'identification radio fréquence étant configuré pour être alimenté par le signal d'activation électromagnétique et émettre un signal codé, et le lecteur d'identification radio fréquence étant configuré pour activer les moyens d'immobilisation à la réception du signal codé.

Les moyens de détection détectent la position de chargement/déchargement et une position indicative de l'inutilisation du quai à partir de la position du rideau de fermeture.

L'invention concerne également un véhicule routier de transport de marchandises selon la revendication 10.

La présente invention sera mieux comprise à l'étude de la description détaillée de modes de réalisation pris à titre d'exemples nullement limitatifs et illustrés par les dessins annexés, sur lesquels :
Figure 1 illustre schématiquement un véhicule routier de transport de marchandises lors de l'accostage dudit véhicule à un quai de chargement selon un exemple de l'invention ;
Figure 2 Figure 3 sont des vues en coupe longitudinale d'un vase à ressort du véhicule de la figure 1 ;
Figure 4 illustre schématiquement un exemple de moyens de contrôle et de moyens d'immobilisation selon l'invention ;
Figure 5 illustre un exemple de mise en oeuvre du dispositif d'immobilisation selon l'invention ; et
Figure 6 illustre schématiquement un véhicule routier porteur de transport de marchandises lors de l'accostage dudit véhicule au quai de chargement selon un autre exemple de l'invention.

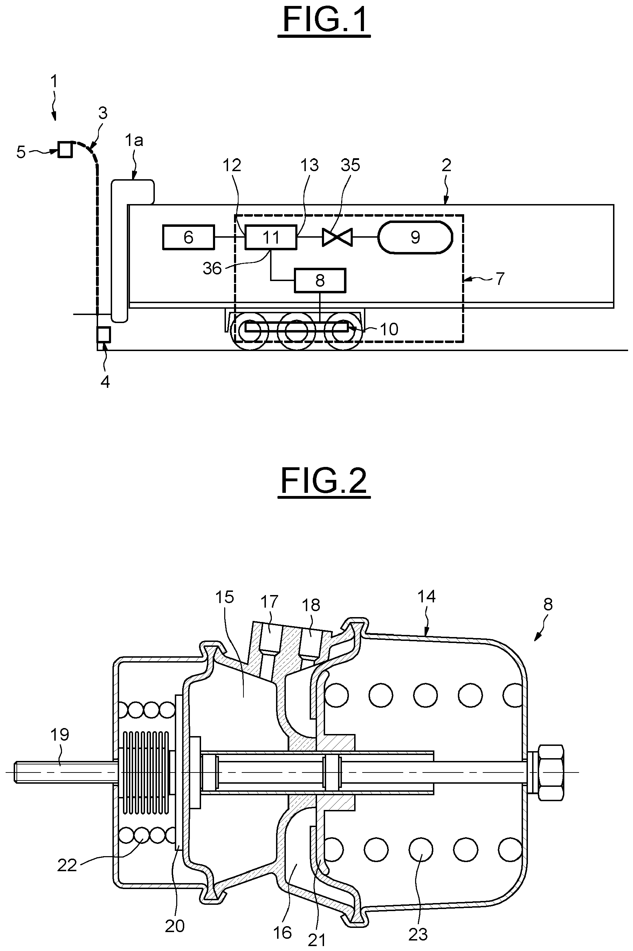

La figure 1 illustre schématiquement un véhicule routier de transport de marchandises lors de l'accostage dudit véhicule à un quai de chargement 1.

Le véhicule routier est ici une semi-remorque 2.

En variante, le véhicule routier pourrait être une remorque.

Le quai de chargement 1 est équipé d'un rideau de fermeture de l'accès au quai de chargement qui est mobile entre une position fermée abaissée et une position ouverte relevée pour le chargement et le déchargement. La position entièrement ouverte ou partiellement ouverte du rideau 3 correspond à une position de chargement/déchargement, et la position fermée du rideau correspond à une position de non-utilisation.

Le quai de chargement 1 comprend également des moyens de détection 5 de la position ouverte ou fermée du rideau 3, et des moyens d'émission 4 disposés sur le quai de chargement 1.

Sur la figure 1, le rideau 3 est en position fermée indicative de la non utilisation du rideau 3.

La semi-remorque est représentée dans une position d'accostage contre des butoirs 1a du quai de chargement.

Les moyens de détection 5 de l'ouverture ou de fermeture du rideau 3 comportent par exemple un capteur de fin de course, le capteur étant par exemple du type inductif ou mécanique.

Les moyens d'émission 4 émettent un signal Sact d'activation électromagnétique en présence d'un signal des moyens de détection 5 représentatif de la position de chargement/déchargement du rideau 3 de fermeture, et comprennent par exemple un émetteur d'identification radio fréquence.

La semi-remorque 2 comprend des moyens de contrôle 6 et des moyens d'immobilisation 7 en position pilotés par les moyens de contrôle 6.

Les moyens d'émission 4, les moyens de contrôle 6 et les moyens d'immobilisation 7 forment un dispositif d'immobilisation en position de la semi-remorque 2 lors de l'accostage de celle-ci au quai de chargement 1.

Les moyens d'immobilisation 7 comprennent par exemple un dispositif de freinage de parc comprenant un vase à ressort 8 à double diaphragmes pilotant le frein de parc de la semi-remorque 2, des bouteilles 9 d'air comprimé reliées au vase à ressort 8, des freins 10 actionnés par le vase à ressort 8, et un circuit de pilotage 11 du vase à ressort.

Les bouteilles 9 assurent une alimentation pneumatique autonome de la semi-remorque 2.

Le circuit de pilotage 11 comprend une première entrée de commande 12 reliée aux moyens de contrôle 6. Le circuit de pilotage 11 comprend également une première connexion pneumatique 13 reliée aux bouteilles 9 par l'intermédiaire d'un robinet de frein de parc 35, et une deuxième connexion pneumatique 36 reliée au vase à ressort 8.

Les freins 10 permettent d'immobiliser en position la semi-remorque 2 lorsqu'ils sont actionnés. Les freins 10 peuvent être du type à disque ou à tambour.

La figure 2 illustre schématiquement une coupe longitudinale d'un exemple de vase à ressorts.

De manière classique, le vase à ressort 8 comprend une enveloppe 14 délimitant intérieurement deux chambres 15, 16.

La première chambre 15 comprend un premier orifice 17 et la deuxième chambre 16 comprend un deuxième orifice 18.

Le vase à ressort 8 comprend une tige 19 de commande actionnant les freins 10, et reliée respectivement à un premier diaphragme 20 disposé dans la première chambre 15 et à un deuxième diaphragme 21 disposé dans la deuxième chambre 16.

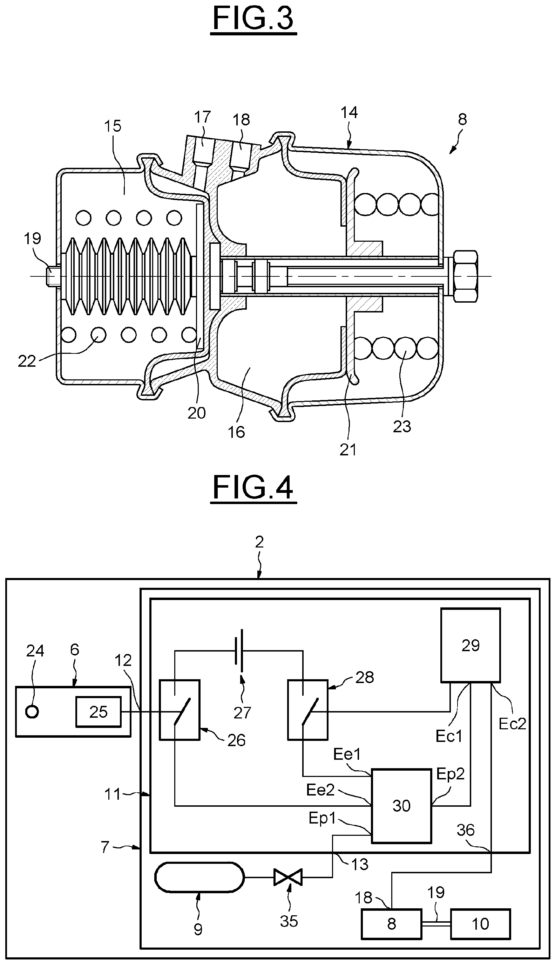

Un premier ressort 22 est disposé entre le premier diaphragme 20 et l'enveloppe 14 à l'intérieur de la première chambre 15, et un deuxième ressort 23 est disposé entre le deuxième diaphragme 21 et l'enveloppe 14 à l'intérieur de la deuxième chambre 16 de sorte que lorsque aucune pression n'est appliquée au travers du deuxième orifice 18, le deuxième ressort 23 comprime le premier ressort 22 de manière à sortir la tige 19 de la première chambre 15 pour actionner les freins 10 (mode frein de parc), et de sorte que lorsqu'une pression suffisante est appliquée au travers du deuxième orifice 18 et aucune pression n'est appliquée au travers du premier orifice 17, la tige 19 est rentrée dans la première chambre 15 pour désactiver les freins 10 tel que représenté à la figure 3.

Si une pression suffisante est appliquée au travers du premier orifice 17 et qu'une pression suffisante n'est pas appliquée au travers du deuxième orifice 18, la tige 19 actionne les freins 10 (mode frein de service).

Bien entendu, le vase à ressort 8 peut être réalisé selon une autre conception. Le vase à ressort 8 peut par exemple comprendre des éléments mobiles en silicone ou tout autre matériau adapté. De manière générale, le vase à ressort comprend une première chambre permettant d'activer le frein de service et une deuxième chambre permettant d'activer le frein de parc.

La figure 4 illustre schématiquement les moyens de contrôle 6 et les moyens d'immobilisation 7 de la semi-remorque 2 reliés à ces moyens de contrôle.

La tige 19 est reliée aux freins 10 pour les actionner ou les désactiver, le deuxième orifice 18 du vase 8 à ressort est relié à la deuxième connexion pneumatique 36 du circuit de pilotage.

Les moyens de contrôle 6 comprennent un badge 24 d'identification radio fréquence et un lecteur 25 d'identification radio fréquence synchronisé avec le badge 24.

Le lecteur 25 est relié à l'entrée de commande 12 du circuit de pilotage 11.

Le lecteur 25 fonctionne en permanence de sorte que le dispositif d'immobilisation en position de la semi-remorque 2 fonctionne sans intervention d'un opérateur minimisant ainsi les risques de mauvaises utilisations dudit dispositif et sécurisant les manoeuvres de transbordement de marchandises, notamment en empêchant le déplacement de la semi-remorque 2 de sorte qu'un chargeur ne puisse pas tomber dans un espace entre le quai de chargement 1 et l'arrière de la semi-remorque 2 après que les manouvres de transbordement ont débuté.

Le circuit de pilotage 11 comprend un premier interrupteur 26 relié à l'entrée de commande 12 pour être piloté par le lecteur 25, une source d'alimentation électrique continue 27, un deuxième interrupteur 28, un contrôleur 29 de freinage pilotant le deuxième interrupteur 28, une valve électropneumatique 30 et le vase à ressort 8.

Le robinet 35 est normalement ouvert de sorte que les bouteilles 9 alimentent la valve électropneumatique 30.

La source d'alimentation électrique continue 27 comprend par exemple une batterie dédiée qui est incorporée dans la semi-remorque 2. Alternativement, la source d'alimentation électrique continue 27 peut être constituée par le groupe frigorifique lorsque la semi-remorque est une semi-remorque frigorifique.

Le lecteur 25 est par exemple alimenté par la source 27 de sorte que la semi-remorque 2 ne nécessite pas de source d'alimentation extérieure pour actionner les moyens d'immobilisation 7.

Cependant il reste possible d'alimenter les moyens d'immobilisation par une source d'alimentation extérieure à la semi-remorque 2, la source d'alimentation extérieure comprenant par exemple un pupitre de commande.

Le contrôleur 29 de freinage peut par exemple être l'unité de contrôle du système de freinage à commande électronique de la semi-remorque 2. Alternativement, le contrôleur 29 peut être une unité de contrôle distincte de celle du système de freinage à commande électronique.

La valve électropneumatique 30 comprend une première entrée Ee1 d'alimentation électrique reliée à une première borne de la source d'alimentation électrique continue 27 par l'intermédiaire du premier interrupteur 26, et une deuxième entrée Ee2 d'alimentation électrique reliée à une deuxième borne de la source d'alimentation électrique continue 27 par l'intermédiaire du deuxième interrupteur 28 de sorte que lorsque les premier et deuxième interrupteurs 26, 28 sont fermés, la valve électropneumatique 30 est alimentée par la source d'alimentation électrique continue 27.

La valve électropneumatique 30 comprend en outre deux connexions pneumatiques, une première connexion pneumatique Ep1 étant reliée à l'entrée pneumatique 13 et la deuxième connexion pneumatique Ep2 étant reliée à une première connexion pneumatique Ec1 du contrôleur 29 de freinage.

Le contrôleur 29 de freinage comprend en outre une deuxième connexion pneumatique Ec2 reliée à la deuxième connexion pneumatique 36.

La valve électropneumatique 30 peut par exemple être une électrovanne normalement ouverte lorsqu'elle n'est pas alimentée par la source d'alimentation électrique continue 27.

Lorsque la vitesse de roulage de la semi-remorque 2 est inférieure à un seuil prédéterminé, par exemple 5 km/h, le contrôleur 29 de freinage ferme le deuxième interrupteur 28.

Ainsi lorsque la semi-remorque 2 est accosté au quai 1, le deuxième interrupteur 28 est fermé.

Le premier orifice 17 du vase à ressort 8 est relié à un circuit de commande du frein de service non représenté.

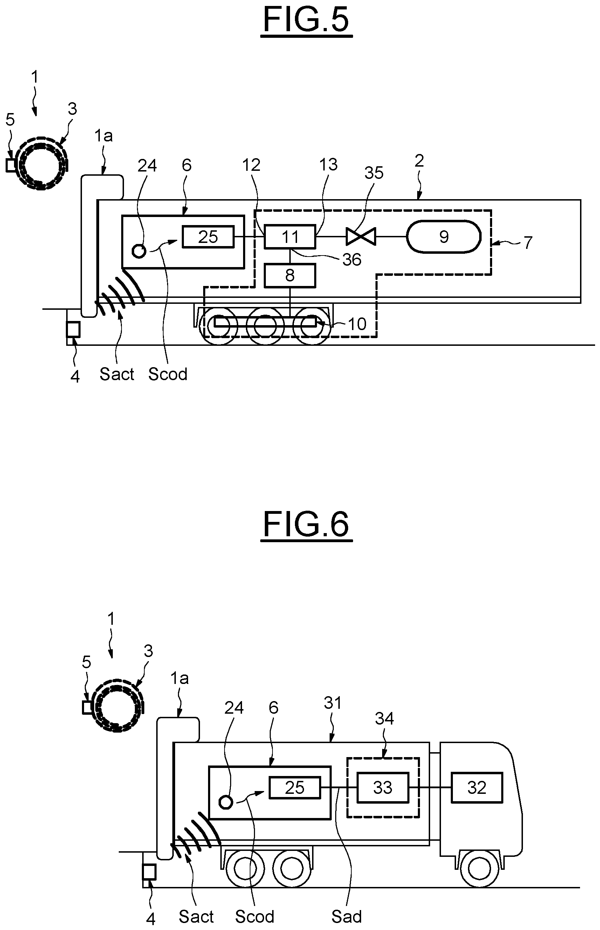

La figure 5 illustre un exemple de mise en oeuvre du dispositif d'immobilisation 7 lors de l'accostage de la semi-remorque 2 au quai de chargement 1, le rideau 3 de fermeture de l'accès au quai 1 de chargement étant en position ouverte.

La semi-remorque 2 est à l'arrêt en face du quai 1 afin de charger ou décharger des marchandises.

Lorsque le rideau 3 est complètement ouvert et se trouve alors en position de chargement/déchargement, le capteur de fin de course incorporé dans les moyens de détection 5 détecte ladite position du rideau 3 et envoie un signal indicatif de ladite position ouverte aux moyens d'émission 4.

A la réception dudit signal, les moyens d'émission 4 émettent le signal Sact d'activation électromagnétique comprenant par exemple une onde radio.

A la réception du signal d'activation Sact, le badge 24 alimenté par le signal Sact émet un signal codé Scod.

A la réception du signal codé Scod, le lecteur 25 ferme le premier interrupteur 26 (figure 4).

Comme la semi-remorque 2 est à l'arrêt, le deuxième interrupteur 28 est déjà en position fermée.

La valve électropneumatique 30 est ainsi alimentée par la source 27 de manière à dépressuriser la deuxième chambre 16 du vase à ressort 8.

La valve électropneumatique 30 empêche l'alimentation en pression du contrôleur 29 de sorte que la deuxième chambre 16 n'est plus alimentée par les bouteilles 9, le contrôleur 29 dépressurisant la deuxième chambre 16.

Comme la deuxième chambre 16 est dépressurisée, le deuxième ressort 23 (figure 2) comprime le premier ressort 22 de manière à sortir la tige 19 de la première chambre 15 actionnant les freins 10, les freins 10 immobilisant en position la semi-remorque 2.

Tant que le rideau 3 est en position ouverte, les moyens d'émission 4 émettent le signal Sact, le badge 24 alimenté par le signal Sact émet le signal codé Scod et le lecteur 25 maintient l'activation des moyens d'immobilisation 7.

Lorsque les moyens de détection 5 détectent que le rideau 3 est en position fermée (position indicative de la non utilisation du rideau 3), le capteur de fin de course envoie un signal indicatif de fermeture du rideau 3 aux moyens d'émission 4.

A la réception dudit signal, les moyens d'émission 4 cessent d'émettre le signal Sact d'activation électromagnétique de sorte que le badge 24 n'étant plus alimenté par le signal Sact d'activation électromagnétique cesse d'émettre le signal codé Scod.

En variante, lorsque les moyens de détection 5 détectent que le rideau 3 entame sa fermeture, le capteur de fin de course envoie un signal indicatif de fermeture du rideau 3 aux moyens d'émission 4 de sorte que les moyens d'émission 4 cessent d'émettre le signal Sact d'activation électromagnétique.

Comme le signal codé Scod n'est plus reçu par le lecteur 25, le lecteur 25 ouvre le premier interrupteur 26 de sorte que la valve électropneumatique 30 n'est plus alimentée par la source 27.

Comme la valve électropneumatique 30 n'est plus alimentée, la pression pneumatique délivrée par les bouteilles 9 pressurise la deuxième chambre 16 du vase à ressort 8.

L'effort généré par la pression appliquée sur le deuxième diaphragme 21 dans la deuxième chambre 16 est supérieur à l'effort généré par le deuxième ressort 23 de sorte que la tige 19 rentre dans la première chambre 15 désactivant les freins 10.

Le dispositif d'immobilisation 7 n'agit pas sur le robinet de frein de parc 35.

Afin d'empêcher des interférences entre plusieurs quais de chargement disposés à proximité les uns des autres, le signal codé Scod est synchronisé avec le lecteur 25 permettant d'empêcher des interférences entre lesdits quais équipés chacun de moyens d'émission 4 propres.

La puissance d'émission du signal Sact par les moyens d'émission 4 est dimensionnée de sorte que seul le badge 24 de la semi-remorque 2 soit activé par le signal Sact d'activation électromagnétique, afin d'empêcher l'activation d'un badge d'identification d'un autre véhicule routier accosté à un quai de chargement à proximité du quai 1.

Le badge 24 est de préférence disposé dans la semi-remorque 2 de sorte qu'il soit situé à proximité du quai de chargement 1 permettant de réduire la puissance d'émission du signal Sact d'activation électromagnétique. Le badge 24 et le lecteur 25 peuvent par exemple être intégrés au plancher ou à l'un des flancs de la carrosserie de la semi-remorque 2.

Bien entendu, le signal Sact d'activation électromagnétique peut comprendre par exemple un signal lumineux issu par exemple d'un laser ou une onde de nature différente, les moyens d'émission 4, les moyens de contrôle 6 étant adaptés selon la nature du signal Sact.

En variante, si le lecteur 25 est disposé de sorte qu'il n'y a pas d'interférences avec un émetteur disposé sur un autre quai de chargement, le lecteur 25 reçoit directement le signal d'activation Sact émis par les moyens d'émission 4 et actionne les moyens d'immobilisation 7 à la réception du signal d'activation Sact, la suppression du badge 24 permettant de simplifier la réalisation des moyens de contrôle 6.

En variante, le circuit de pilotage 11 peut ne pas comprendre le deuxième interrupteur 28, le contrôleur 29 de freinage n'étant pas configuré pour piloter ledit deuxième interrupteur, permettant de simplifier la réalisation et la mise au point du circuit de pilotage 11.

Dans l'exemple de réalisation décrit, les moyens de détection 5 envoie un signal aux moyens d'émission 4 lorsque le rideau 3 est en position complètement ouverte. Alternativement, il est possible de prévoir que les moyens de détection 5 envoie ce signal lorsque le rideau ne se trouve plus dans sa position fermée, c'est à dès qu'il n'est plus dans sa position fermée ou lors du passage de la position fermée à la position complètement ouverte.

La figure 6 illustre schématiquement un véhicule routier de transport de marchandises du type porteur 31 lors de l'accostage au quai de chargement 1.

On suppose que le rideau 3 du quai 1 est en position ouverte de sorte que les moyens d'émission 4 émettent le signal Sact comprenant par exemple l'onde radio.

Le véhicule porteur 31 comprend un moteur de propulsion 32, une unité de contrôle 33 du moteur, les moyens de contrôle 6 comprenant le badge 24 et le lecteur 25, et des moyens d'immobilisation 34 comprenant l'unité de contrôle 33.

Le lecteur 25 est relié à l'unité de contrôle 33 de sorte que lorsque le signal codé Scod émis par le badge 24 est reçu par le lecteur 25, le lecteur 25 émet un signal d'anti-démarrage Sad à l'unité de contrôle 33.

A la réception du signal d'anti-démarrage Sad, l'unité de contrôle 33 éteint le moteur de propulsion 32 ou empêche un démarrage du moteur de propulsion 32.

Lorsque les moyens d'émission 4 n'émettent plus le signal Sact d'activation électromagnétique, le lecteur 25 cesse d'émettre le signal d'anti-démarrage Sad de sorte qu'un démarrage du moteur 32 soit possible.

Le signal d'antidémarrage Sad comprend une tension prédéterminée, par exemple une tension continue de 12 volts, 24 volts ou 48 volts générée par les moyens de contrôle 6.

Ce mode de réalisation des moyens d'immobilisation est implémentable sur un véhicule routier disposant d'un moteur de propulsion propre qui est piloté par une unité de contrôle.

## Revendications

1. Procédé d'immobilisation d'un véhicule routier de transport de marchandises (2, 31) lors de l'accostage dudit véhicule à un quai de chargement (1), comprenant :
- l'émission d'un signal (Sact) d'activation électromagnétique comprenant une onde radio par des moyens d'émission (4) disposés sur le quai de chargement lorsqu'un rideau (3) de fermeture de l'accès au quai de chargement, qui est mobile entre une position ouverte de chargement/déchargement et une position fermée abaissée, tant que le rideau est dans la position de chargement/déchargement, et
- l'actionnement de moyens d'immobilisation (7, 34) en position du véhicule routier de transport de marchandises, les moyens d'immobilisation étant activés par des moyens de contrôle (6) lors de la réception du signal d'activation électromagnétique par lesdits moyens de contrôle, les moyens d'immobilisation (7, 34) et les moyens de contrôle (6) étant disposés sur le véhicule routier de transport de marchandises,
les moyens d'émission (4) comprennent un émetteur d'identification radio fréquence, et les moyens de contrôle (6) comprennent un badge (24) d'identification radio fréquence et un lecteur (25) d'identification radio fréquence synchronisé avec ledit badge (24), l'émission du signal (Sact) d'activation électromagnétique comprenant l'émission du signal d'activation électromagnétique par l'émetteur d'identification radio fréquence lorsque le rideau (3) de fermeture est dans la position de chargement/déchargement, et la réception du signal d'activation électromagnétique comprenant l'émission d'un signal codé (Scod) par le badge (24) d'identification radio fréquence alimenté par le signal d'activation électromagnétique et la réception du signal codé par le lecteur (25) d'identification radio fréquence.

2. Procédé selon la revendication 1, dans lequel l'actionnement des moyens d'immobilisation (7) du véhicule routier de transport de marchandises (2) comprend l'activation d'un dispositif de freinage de parc dudit véhicule.

3. Procédé selon la revendication 2, dans lequel l'activation du dispositif de freinage de parc du véhicule routier de transport de marchandises (2) comprend la dépressurisation d'un vase à ressort (8) dudit dispositif pour actionner les freins du véhicule.

4. Procédé selon la revendication 1, dans lequel l'actionnement des moyens d'immobilisation (34) du véhicule routier de transport de marchandises comprend l'émission d'un signal d'anti-démarrage (Sad), le signal d'anti-démarrage étant configuré pour éteindre un moteur de propulsion du véhicule routier de transport de marchandises (31) ou empêcher le démarrage dudit moteur.

5. Procédé selon la revendication 4, dans lequel le signal d'anti-démarrage (Sad) comprend une tension continue prédéterminée qui est générée par les moyens de contrôle (6) et qui est transmise à une unité de contrôle du moteur de propulsion (32) du véhicule routier de transport de marchandises (41).

6. Dispositif d'immobilisation d'un véhicule routier de transport de marchandises (2, 31) lors de l'accostage dudit véhicule à un quai de chargement (1), comprenant :
- des moyens d'immobilisation (7, 34) en position du véhicule routier de transport de marchandises disposés sur ledit véhicule,
- au moins un moyen de détection pour détecter une position de chargement/déchargement d'un rideau (3) de fermeture de l'accès au quai de chargement qui est mobile entre une position ouverte de chargement/déchargement et une position fermée abaissée,
- des moyens d'émission (4) disposés sur le quai de chargement et configurés pour émettre un signal (Sact) d'activation électromagnétique comprenant une onde radio en présence d'un signal du moyen de détection représentatif de la position de chargement/déchargement du rideau (3) de fermeture, et
- des moyens de contrôle (6) disposés sur le véhicule routier de transport de marchandises et configurés pour activer les moyens d'immobilisation en position du véhicule routier de transport de marchandises à la réception du signal d'activation électromagnétique,
- les moyens d'émission (4) comprennent un émetteur d'identification radio fréquence, et les moyens de contrôle (6) comprennent un badge (24) d'identification radio fréquence et un lecteur (25) d'identification radio fréquence synchronisé avec le badge, l'émetteur d'identification radio étant configuré pour émettre le signal (Sact) d'activation électromagnétique lorsque le rideau (3) de fermeture est dans la position de chargement/déchargement, le badge d'identification radio fréquence étant configuré pour être alimenté par le signal d'activation électromagnétique et émettre un signal codé (Scod), et le lecteur d'identification radio fréquence étant configuré pour activer les moyens d'immobilisation (7, 34) à la réception du signal codé.

7. Dispositif selon la revendication 6, dans lequel les moyens d'immobilisation (7) comprennent un dispositif de freinage de parc du véhicule (2).

8. Dispositif selon la revendication 7, dans lequel le dispositif de freinage de parc du véhicule comprend un vase à ressort (8) configuré pour actionner des freins du véhicule (10), les moyens de contrôle (6) étant configurés pour dépressuriser le vase à ressort.

9. Dispositif selon la revendication 6, dans lequel les moyens d'immobilisation (34) comprennent une unité de contrôle (33) du véhicule routier de transport de marchandises (31) configuré pour éteindre un moteur de propulsion (32) du véhicule routier de transport de marchandises (31) ou empêcher le démarrage dudit moteur à la réception d'un signal d'anti-démarrage (Sad).

10. Véhicule routier de transport de marchandises (2, 31) comportant des moyens d'immobilisation (7, 34) en position du véhicule et des moyens de contrôle (6) des moyens d'immobilisation, les moyens de contrôle (6) étant aptes à recevoir un signal (Sact) d'activation électromagnétique comprenant une onde radio de moyens d'émission disposés sur un quai de chargement tant qu'un rideau (3) de fermeture est dans une position de chargement/déchargement, et configurés pour activer les moyens d'immobilisation à la réception dudit signal (Sact) d'activation électromagnétique, les moyens de contrôle (6) comprenant un badge (24) d'identification radio fréquence et un lecteur (25) d'identification radio fréquence synchronisé avec le badge, le badge d'identification radio fréquence étant configuré pour être alimenté par le signal d'activation électromagnétique et émettre un signal codé (Scod), et le lecteur d'identification radio fréquence étant configuré pour activer les moyens d'immobilisation (7, 34) à la réception du signal codé.

## Patentansprüche

1. Verfahren zum Blockieren eines Gütertransportstraßenfahrzeugs (2, 31) beim Andocken des Fahrzeugs an eine Laderampe (1), umfassend:
- Aussenden eines elektromagnetischen Aktivierungssignals (Sact), das eine Funkwelle umfasst, durch ein an der Laderampe angeordnetes Sendemittel (4), wenn ein Gitter (3) zum Verschließen des Zugangs zur Laderampe, das zwischen einer offenen Lade-/Entladeposition und einer geschlossenen abgesenkten Position bewegbar ist, sich in der Lade-/Entladeposition befindet, und
- Betätigen der Mittel zum Blockieren (7, 34) des Gütertransportstraßenfahrzeugs in seiner Position, wobei die Blockiermittel durch das Steuermittel (6) bei Empfang des elektromagnetischen Aktivierungssignals durch das Steuermittel aktiviert werden, wobei die Blockiermittel (7, 34) und das Steuermittel (6) am Gütertransportstraßenfahrzeug angeordnet sind,
wobei das Sendemittel (4) einen Funkfrequenz-Identifikationssender umfasst und das Steuermittel (6) ein Funkfrequenz-Identifikations-Tag (24) und ein Funkfrequenz-Identifikationslesegerät (25), das mit dem Tag (24) synchronisiert ist, umfasst, wobei das Senden des elektromagnetischen Aktivierungssignals (Sact) das Senden des elektromagnetischen Aktivierungssignals durch den Funkfrequenz-Identifikationssender umfasst, wenn sich das Schließgitter (3) in der Lade-/Entladeposition befindet, und das Empfangen des elektromagnetischen Aktivierungssignals das Senden eines codierten Signals (Scod) durch das Funkfrequenz-Identifikations-Tag (24), das durch das elektromagnetische Aktivierungssignal gespeist wird, und das Empfangen des codierten Signals durch das Funkfrequenz-Identifikationslesegerät (25) umfasst.

2. Verfahren nach Anspruch 1, wobei das Betätigen der Blockiermittel (7) des Gütertransportstraßenfahrzeugs (2) das Aktivieren einer Feststellbremsvorrichtung des Fahrzeugs umfasst.

3. Verfahren nach Anspruch 2, wobei das Aktivieren der Feststellbremsvorrichtung des Gütertransportstraßenfahrzeugs (2) das Druckentlasten eines Federtopfs (8) der Vorrichtung zum Betätigen der Bremsen des Fahrzeugs umfasst.

4. Verfahren nach Anspruch 1, wobei das Betätigen der Blockiermittel (34) des Gütertransportstraßenfahrzeugs das Aussenden eines Wegfahrsperrensignals (Sad) umfasst, wobei das Wegfahrsperrensignal dazu konfiguriert ist, einen Antriebsmotor des Gütertransportstraßenfahrzeugs (31) auszuschalten oder das Starten des Motors zu verhindern.

5. Verfahren nach Anspruch 4, wobei das Wegfahrsperrensignal (Sad) eine vorbestimmte Gleichspannung umfasst, die von dem Steuermittel (6) erzeugt und an eine Steuereinheit des Antriebsmotors (32) des Gütertransportstraßenfahrzeugs (41) übertragen wird.

6. Vorrichtung zum Blockieren eines Gütertransportstraßenfahrzeugs (2, 31) beim Andocken des Fahrzeugs an eine Laderampe (1), umfassend:
- Mittel zum Blockieren (7, 34) des Gütertransportstraßenfahrzeugs in seiner Position, die am Fahrzeug angeordnet sind,
- mindestens ein Detektionsmittel zum Detektieren einer Lade-/Entladeposition eines Gitters (3) zum Verschließen des Zugangs zur Laderampe, das zwischen einer offenen Lade-/Entladeposition und einer geschlossenen abgesenkten Position bewegbar ist,
- ein Sendemittel (4), das an der Laderampe angeordnet und dazu konfiguriert ist, ein elektromagnetisches Aktivierungssignal (Sact), das eine Funkwelle umfasst, bei Vorhandensein eines Signals von dem Detektionsmittel, das die Lade-/Entladeposition des Schließgitters (3) darstellt, auszusenden, und
- ein Steuermittel (6), das am Gütertransportstraßenfahrzeug angeordnet und dazu konfiguriert ist, bei Empfang des elektromagnetischen Aktivierungssignals die Mittel zum Blockieren des Gütertransportstraßenfahrzeugs in seiner Position zu aktivieren,
- wobei das Sendemittel (4) einen Funkfrequenz-Identifikationssender umfasst und das Steuermittel (6) ein Funkfrequenz-Identifikations-Tag (24) und ein Funkfrequenz-Identifikationslesegerät (25), das mit dem Tag synchronisiert ist, umfasst, wobei der Funkfrequenz-Identifikationssender dazu konfiguriert ist, das elektromagnetische Aktivierungssignal (Sact) auszusenden, wenn sich das Schließgitter (3) in der Lade-/Entladeposition befindet, das Funkfrequenz-Identifikations-Tag dazu konfiguriert ist, durch das elektromagnetische Aktivierungssignal gespeist zu werden und ein codiertes Signal (Scod) auszusenden, und das Funkfrequenz-Identifikationslesegerät dazu konfiguriert ist, die Blockiermittel (7, 34) bei Empfang des codierten Signals zu aktivieren.

7. Vorrichtung nach Anspruch 6, wobei die Blockiermittel (7) eine Feststellbremsvorrichtung des Fahrzeugs (2) umfassen.

8. Vorrichtung nach Anspruch 7, wobei die Feststellbremsvorrichtung des Fahrzeugs einen Federtopf (8) umfasst, der dazu konfiguriert ist, die Fahrzeugbremsen (10) zu betätigen, wobei das Steuermittel (6) dazu konfiguriert ist, am Federtopf eine Druckentlastung durchzuführen.

9. Vorrichtung nach Anspruch 6, wobei die Blockiermittel (34) eine Steuereinheit (33) des Gütertransportstraßenfahrzeugs (31) umfassen, die dazu konfiguriert ist, einen Antriebsmotor (32) des Gütertransportstraßenfahrzeugs (31) auszuschalten oder das Starten des Motors bei Empfang eines Wegfahrsperrensignals (Sad) zu verhindern.

10. Gütertransportstraßenfahrzeug (2, 31), das Mittel zum Blockieren (7, 34) des Fahrzeugs in seiner Position und ein Steuermittel (6) der Blockiermittel umfasst, wobei das Steuermittel (6) dazu ausgelegt ist, ein elektromagnetisches Aktivierungssignal (Sact), das eine Funkwelle umfasst, von einem Sendemittel, das an einer Laderampe angeordnet ist, zu empfangen, wenn sich ein Schließgitter (3) in einer Lade-/Entladeposition befindet, und das dazu konfiguriert ist, die Blockiermittel bei Empfang des elektromagnetischen Aktivierungssignals (Sact) zu aktivieren, wobei das Steuermittel (6) ein Funkfrequenz-Identifikations-Tag (24) und ein Funkfrequenz-Identifikationslesegerät (25), das mit dem Tag synchronisiert ist, umfasst, wobei das Funkfrequenz-Identifikations-Tag dazu konfiguriert ist, durch das elektromagnetische Aktivierungssignal gespeist zu werden und ein codiertes Signal (Scod) auszusenden, und das Funkfrequenz-Identifikationslesegerät dazu konfiguriert ist, die Blockiermittel (7, 34) bei Empfang des codierten Signals zu aktivieren.

## Claims

1. A method for immobilising a road vehicle for transporting goods (2, 31) when docking said vehicle at a loading dock (1), comprising:
- the emission of an electromagnetic activation signal (Sact) comprising a radio wave by emission means (4) disposed on the loading dock when a curtain (3) for closing access to the loading dock, which is movable between an open loading/unloading position and a lowered closed position, as long as the curtain is in the loading/unloading position, and
- the actuation of means (7, 34) for immobilising the road vehicle for transporting goods in position, the immobilisation means being activated by control means (6) upon reception of the electromagnetic activation signal by said control means, the immobilisation means (7, 34) and the control means (6) being disposed on the road vehicle for transporting goods,
the emission means (4) comprise a radio frequency identification emitter, and the control means (6) comprise a radio frequency identification badge (24) and a radio frequency identification reader (25) synchronised with said badge (24), the emission of the electromagnetic activation signal (Sact) comprising the emission of the electromagnetic activation signal by the radio frequency identification emitter when the closing curtain (3) is in the loading/unloading position, and the reception of the electromagnetic activation signal comprising the emission of a coded signal (Scod) by the radio frequency identification badge (24) powered by the electromagnetic activation signal and the reception of the coded signal by the radio frequency identification reader (25).

2. The method according to claim 1, wherein the actuation of the means (7) for immobilising the road vehicle for transporting goods (2) comprises the activation of a parking braking device of said vehicle.

3. The method according to claim 2, wherein the activation of the parking braking device of the road vehicle for transporting goods (2) comprises the depressurisation of a spring vessel (8) of said device to actuate the brakes of the vehicle.

4. The method according to claim 1, wherein the actuation of the immobilisation means (34) of the road vehicle for transporting goods comprises the emission of an immobiliser signal (Sad), the immobiliser signal being configured to turn off a propulsion engine of the road vehicle for transporting goods (31) or prevent the starting of said engine.

5. The method according to claim 4, wherein the immobiliser signal (Sad) comprises a predetermined direct voltage which is generated by the control means (6) and which is transmitted to a control unit of the propulsion motor (32) of the road vehicle for transporting goods (41).

6. A device for immobilising a road vehicle for transporting goods (2, 31) when docking said vehicle at a loading dock (1), comprising:
- means (7, 34) for immobilising the road vehicle for transporting goods in position disposed on said vehicle,
- at least one detection means for detecting a loading/unloading position of a curtain (3) closing access to the loading dock which is movable between an open loading/unloading position and a lowered closed position,
- emission means (4) disposed on the loading dock and configured to emit an electromagnetic activation signal (Sact) comprising a radio wave in the presence of a signal from the detection means representative of the loading/unloading position of the closing curtain (3), and
- control means (6) disposed on the road vehicle for transporting goods and configured to activate the means for immobilising the road vehicle for transporting goods in position upon reception of the electromagnetic activation signal,
- the emission means (4) comprise a radio frequency identification emitter, and the control means (6) comprise a radio frequency identification badge (24) and a radio frequency identification reader (25) synchronised with the badge, the radio identification emitter being configured to emit the electromagnetic activation signal (Sact) when the closing curtain (3) is in the loading/unloading position, the radio frequency identification badge being configured to be powered by the electromagnetic activation signal and emit a coded signal (Scod), and the radio frequency identification reader being configured to activate the immobilisation means (7, 34) upon reception of the coded signal.

7. The device according to claim 6, wherein the immobilisation means (7) comprise a vehicle parking braking device (2).

8. The device according to claim 7, wherein the vehicle parking braking device comprises a spring vessel (8) configured to actuate the vehicle brakes (10), the control means (6) being configured to depressurise the spring vessel.

9. The device according to claim 6, wherein the immobilisation means (34) comprise a unit (33) for controlling the road vehicle for transporting goods (31) configured to turn off a propulsion engine (32) of the road vehicle for transporting goods (31) or prevent the starting of said engine upon reception of an immobiliser signal (Sad).

10. A road vehicle for transporting goods (2, 31) including means for immobilising (7, 34) the vehicle in position and means for controlling (6) the immobilisation means, the control means (6) being capable of receiving an electromagnetic activation signal (Sact) comprising a radio wave from emission means disposed on a loading dock as long as a closing curtain (3) is in a loading/unloading position, and configured to activate the immobilisation means upon reception of said electromagnetic activation signal (Sact), the control means (6) comprising a radio frequency identification badge (24) and a radio frequency identification reader (25) synchronised with the badge, the radio frequency identification badge being configured to be powered by the electromagnetic activation signal and to emit a coded signal (Scod), and the radio frequency identification reader being configured to activate the immobilisation means (7, 34) upon reception of the coded signal.
